# EUROPEAN PATENT APPLICATION

(11) **EP 3 352 535 A1**
(43) Date of publication of application: **25.07.2018**
(21) Application number: 18151598.2
(22) Date of filing: 15.01.2018
(51) Int. Cl.: H05B 37/02

(54) **COMMISSIONING METHOD FOR THE CONFIGURATION OF A LIGHTING SYSTEM**

(30) Priority: 18.01.2017 IT 201700005053
(71) Applicant: Bticino S.p.A., 21100 Varese (IT)
(72) Inventor: SANTINI, Ernesto, 28060 SOZZAGO (NO) (IT)
(74) Representative: Biallo, Dario

(57) **Abstract**

Control device (20) for controlling at least one lighting device (11), wherein each of the lighting devices (11) is controlled by a respective smart actuator (12) associated with a unique identification code, the control device (20) comprising: at least one push-button electric control apparatus (21); a light intensity sensor (22); a data transceiver module (23); a processing and control unit (24) configured to enter a configuration mode when the at least one push-button electric control apparatus (21) is pressed for a predetermined time interval and to carry out, in the configuration mode, the operations: receiving the respective identification codes from the smart actuators (12) and storing them; for each identification code received, controlling the turning on and then the turning off of the respective lighting device (11) and storing the light intensity detected by the light intensity sensor (22); selecting the lighting device (11) for which the highest light intensity was detected, associating the at least one push-button electric control apparatus (21) with the smart actuator (12) of such lighting device (11).

## Description

The present invention relates to a control device for controlling at least one lighting device of a lighting system and to a lighting system comprising such control device.

The present invention also relates to a method for configuring the aforesaid lighting system.

Nowadays, lighting systems are known comprising a plurality of lighting devices that can be activated to be turned on or turned off by so-called smart actuators, such as for example electronic relays. Generally, such smart actuators are associated with the relative control apparatuses, for example push-button switches, by means of manual configurators or software in itself known in the background art.

These configurations are carried out typically when the lighting system is installed and tested. In particular, if the lighting system is integrated in a home automation system in which a communication BUS connects the various user devices and the relative control apparatuses, the operator may connect to the BUS by means of a terminal, for example a laptop, and configure the control lines of the actuators of the lighting devices with specific software.

In any case, the initial configuration of the aforesaid smart actuators and the modification of such configuration are in any case rather complex and require the work of specialized technicians, thus being costly and inconvenient for the end user.

It is the object of the present invention to obviate the drawbacks mentioned above and in particular, to devise a control device for controlling at least one lighting device of a lighting system that facilitates and simplifies configuring and testing the lighting system itself.

It is another object of the present invention to provide a lighting system that is simple and immediate to configure, also for a common, non-specialized user. It is another object of the present invention to devise a method for configuring a simple and safe lighting system.

These and other objects according to the present invention are achieved by making a control device and a lighting system as described in the independent claims. Further features of the control device and of the lighting system are the subject of the dependent claims.

The features and advantages of a control device and of a lighting system according to the present invention will be more apparent from the following exemplifying and not limiting description, with reference to the schematic attached drawings, wherein:
- figures 1a and 1b are two schematic views respectively of a first and a second embodiment of a lighting system according to the present invention;

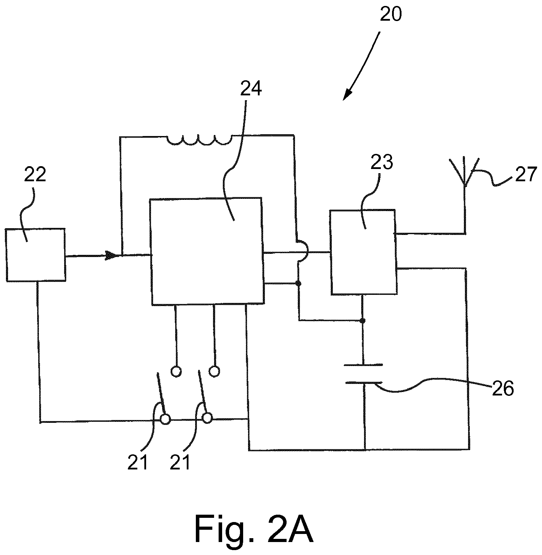

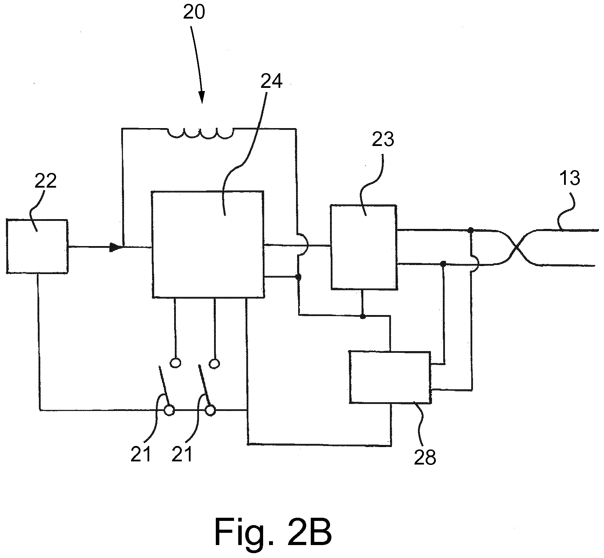

- figures 2a and 2b are two circuit schematic views respectively of a first and a second embodiment of a control device according to the present invention;

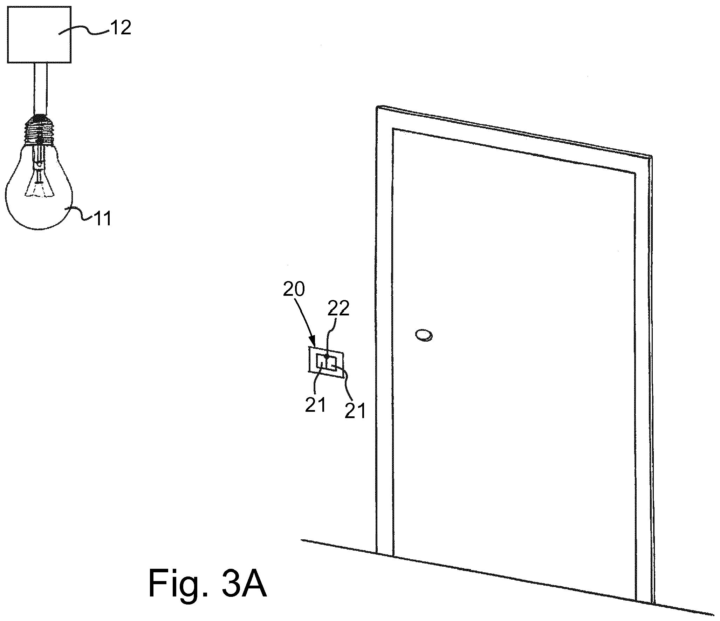

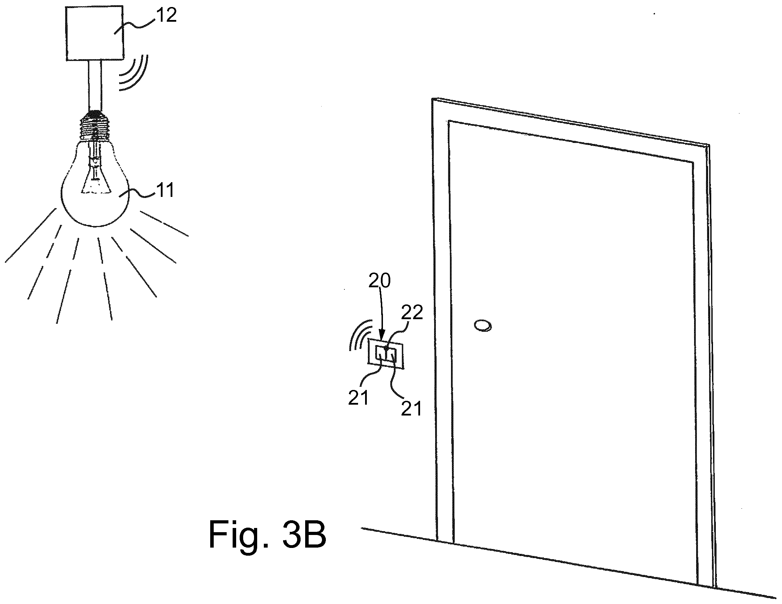

- figures 3a and 3b show two steps of the configuration procedure of a lighting system according to the present invention.

With reference to the drawings, a lighting system is shown, indicated as a whole with 10.

Such lighting system 10 comprises a plurality of lighting devices 11 and a plurality of smart actuators 12 adapted to respectively control the lighting devices 11, where each of the smart actuators 12 is associated with a unique identification code.

Preferably, the lighting devices 11 and the relative smart actuators 12 are connected to a communication BUS 13 adapted to transmit the power supply and the turn on or turn off control signals, to them. Therefore, the lighting system 10 in this case is integrated into a home automation system in which also other electric devices and/or electronic users, such as for example a video entry-phone, IP cameras, audio playback devices, video playback devices, and so on are connected to the same communication BUS 13.

Alternatively, the lighting devices 11 and the relative smart actuators 12 may be connected to a power line of the domestic electrical system of the area where the lighting system 10 is installed.

In any case, according to the present invention, at least one control device 20 for controlling at least one of the lighting devices 11 described in the continuation of the present description.

Such control device 20 comprises at least one push-button electric control apparatus 21, a light intensity sensor 22, a data transceiver module 23 adapted to communicate with the smart actuators 12, and a processing and control unit 24 associated with the at least one push-button electric control apparatus 21, with the light intensity sensor 22 and with the data transceiver module 23.

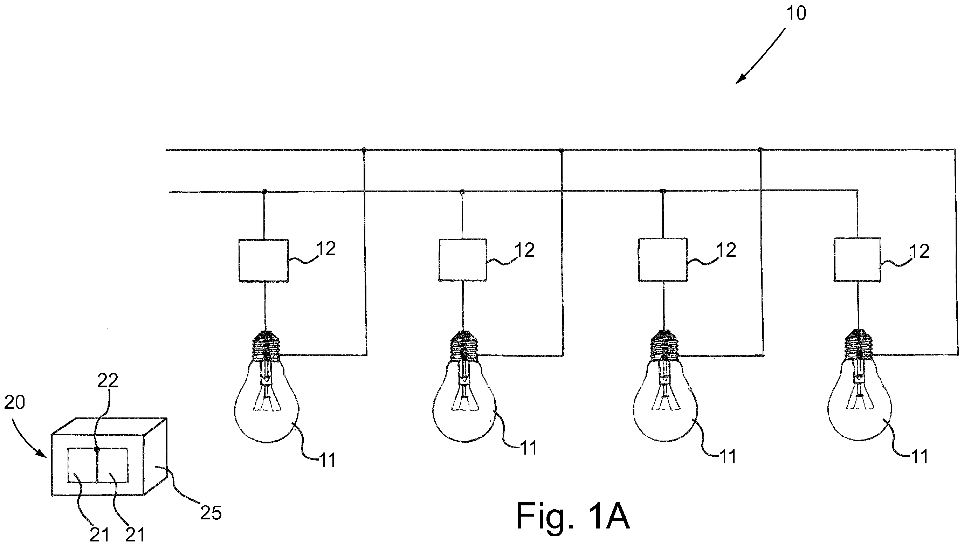

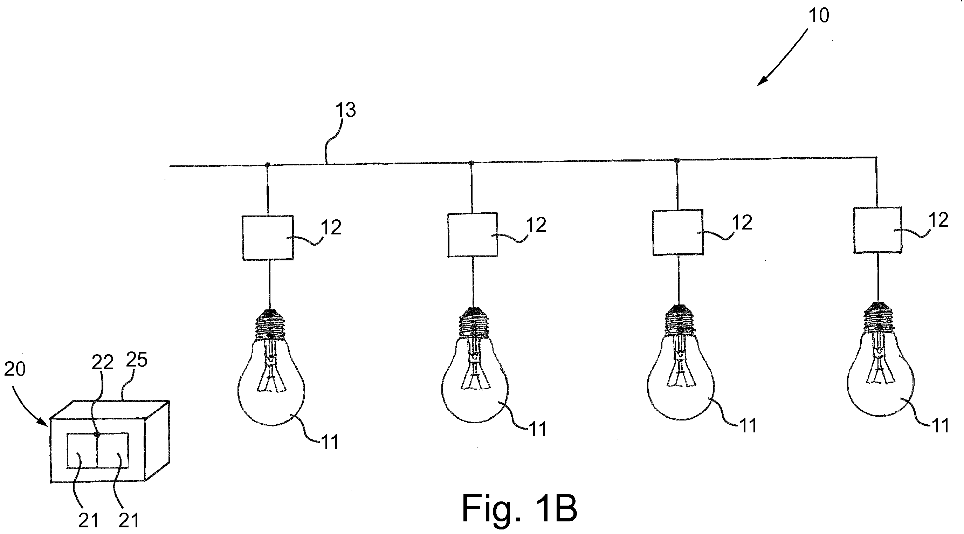

In particular, the control device 20 comprises a box-shaped body 25 in which there are housed the at least one push-button electric control apparatus 21, the light intensity sensor 22, the data transceiver module 23 and the processing and control unit 24. In detail, the at least one push-button electric control apparatus 21 and the light intensity sensor 22 face outwards of the box-shaped body 25, as shown for example in figures 1a and 1b.

The light intensity sensor 22 may be for example, a photodiode.

The processing and control unit 24 may be for example, a microprocessor or a microcontroller.

Advantageously, the processing and control unit 24 is configured to enter a configuration mode when the at least one push-button electric control apparatus 21 is pressed for a predetermined time interval and to carry out, in such configuration mode, the operations:
- querying the smart actuators 12 and receiving the respective identification code therefrom by means of the data transceiver module 23, and storing said identification codes received in a predetermined order;
- for each identification code received, controlling the turning on of the respective lighting device 11, storing the light intensity detected by the light intensity sensor 22 and controlling the turning off of the respective lighting device 11;
- selecting the lighting device 11 in relation to which the highest light intensity was detected, uniquely associating the at least one push-button electric control apparatus 21 with the control of the smart actuator 12 of the selected lighting device 11 and storing such association.

Preferably, the data transceiver module 23 is adapted to communicate with said smart actuators 12 by means of a wireless connection. In such case, the data transceiver module 23 and the smart actuators 12 are provided with transceiver antennas 27 and data coding/decoding circuits.

Alternatively or additionally to the wireless arrangement, the data transceiver module 23 is adapted to communicate with the smart actuators 12 by means of a wired connection, for example by means of the communication BUS. In such latter case, the data transceiver module 23 and the smart actuators 12 are connected to the communication BUS 13.

Preferably, the control device 20 comprises one or more batteries 26 adapted to power the processing and control unit 24 and the data transceiver module 23. Alternatively or additionally to the one or more batteries 26, the control device 20 may comprise a power unit 28 of the processing and control unit 24 and of the data transceiver module 23 adapted to in turn receive electric energy from a wired connection like the communication BUS 13.

Preferably, the processing and control unit 24 is configured to carry out a verification step before associating the selected lighting device 11 with the at least one push-button electric control apparatus 21, where the verification step comprises the operations of:
- controlling the turning on of the selected lighting device 11, storing the light intensity detected by the light intensity sensor 22 and then controlling the turning off of the selected lighting device 11;
- verifying that the light intensity detected in relation to the selected lighting device 11 is the highest of those detected and stored in relation to the lighting devices 11.

Preferably, the processing and control unit 24 is configured to notify a user of the successful association between push-button electric control apparatus 21 and selected lighting device 11.

Moreover, the processing and control unit 24 may be configured to cancel the association, when present, between one of the push-button control apparatuses 21 and one of the smart actuators 12 and then enter configuration mode when the push-button electric control apparatus 21 is pressed for the predetermined time interval.

The operation of the control device 20 according to the present invention is explained below with particular reference to a testing step of the lighting system 10. Let us consider by way of example, the case in which the data transceiver module 23 is adapted to communicate with the smart actuators 12 of the system by means of a wireless connection and in which the control device 20 is provided with one or more batteries 26 and with two push-button control apparatuses 21. The control device 20 is brought into a first room where the lighting device 11 to be associated with one of the two push-button control apparatuses 21, is installed. A first push-button control apparatus 21 is pressed for the predetermined time interval, for example 2 or 3 seconds. In configuration mode, the control device 20 detects and identifies the smart actuators 12 present and one by one controls them first to turn on and then to turn off, thus detecting the light intensity in the first room. The lighting device 11 installed in the first room where the control device 20 was brought is the one at which the light intensity detected is the highest. Then, the processing unit 24 associates such lighting device 11 with the first push-button electric control apparatus 21. It is presumed that a second of the push-button electric control apparatuses 21 of the aforesaid control device 20 is to be associated with a lighting device 11 installed in a second room. Therefore, the control device 20 is brought and the same procedure described above is repeated in this case by pressing the second push-button electric apparatus 21.

At the end of the configuration operation, the control device 20 may be applied in any point of the building.

The features of the control device, of the lighting system and of the method for configuring the lighting system that are object of the present invention, as well as the relative advantages thereof, are evident from the above description.

The control device according to the present invention indeed allows configuring the lighting system with the smart actuators in a simple and practical manner that does not require the intervention by specialized technicians.

This results in net savings with respect to the testing methods of such systems of the prior art, both in terms of costs and time.

These advantages are even more apparent if one thinks of the case in which the control device comprises a plurality of push-button electric control apparatuses that may be associated with the respective separate lighting devices in a simple and immediate manner for the user. Indeed, it is sufficient to repeat the configuration procedure previously described for each individual push-button electric control apparatus by moving the control device each time in such a manner that the lighting device to be associated is the brightest for the brightness sensor of the control device. Using a single brightness sensor, it is therefore possible to configure a plurality of push-button electric control apparatuses of a same control device according to the present invention.

Finally, it is apparent that the control device, the lighting system and the method for configuring the lighting system thus conceived are susceptible to many modifications and variants, all falling within the invention; furthermore, all details can be replaced by equivalent technical elements. In practice, the materials used, as well as their sizes, can be of any type according to the technical requirements.

## Claims

1. Control device (20) for controlling at least one lighting device (11) of a plurality of lighting devices (11) of a lighting system (10), wherein each of said lighting devices (11) is controlled to be turned on and off by a respective smart actuator (12) associated with a unique identification code, said control device (20) comprising:
- at least one push-button electric control apparatus (21) ;
- a light intensity sensor (22);
- a data transceiver module (23) adapted to communicate with said smart actuators (12);
- a processing and control unit (24) associated with said at least one push-button electric control apparatus (21), with said light intensity sensor (22) and with said data transceiver module (23), said processing and control unit (24) being configured to enter a configuration mode when said at least one push-button electric control apparatus (21) is pressed for a predetermined time interval and to carry out, in said configuration mode, the operations of:
- querying said smart actuators (12) and receiving the respective identification code therefrom by means of said data transceiver module (23), and storing said identification codes received in a predetermined order;
- for each identification code received, controlling the turning on of the respective lighting device (11), storing the light intensity detected by said light intensity sensor (22) and controlling the turning off of said respective lighting device (11);
- selecting the lighting device (11) in relation to which the highest light intensity was detected, uniquely associating said at least one push-button electric control apparatus (21) with the control of the smart actuator (12) of said selected lighting device (11) and storing such association.

2. Control device (20) according to claim 1 wherein said data transceiver module (23) is adapted to communicate with said smart actuators (12) by means of a wireless connection.

3. Control device (20) according to claim 1 or 2 wherein said data transceiver module (23) is adapted to communicate with said smart actuators (12) by means of a wired connection.

4. Control device (20) according to one of the preceding claims wherein said control device (20) comprises one or more batteries (26) adapted to power said processing and control unit (24) and said data transceiver module (23).

5. Control device (20) according to one of the preceding claims wherein said processing and control unit (24) is configured to carry out a verification step before associating said selected lighting device (11) with said at least one push-button electric control apparatus (21), said verification step comprising the operations of:
- controlling the turning on of said selected lighting device (11), storing the light intensity detected by said light intensity sensor (22) and controlling the turning off of said selected lighting device (11);
- verifying that the light intensity detected in relation to said selected lighting device (11) is the highest of those detected and stored in relation to said lighting devices (11).

6. Control device (20) according to one of the preceding claims wherein said processing and control unit (24) is configured for notifying a user of the successful association between push-button electric control apparatus (21) and selected lighting device (11).

7. Lighting system (10) comprising:
- a plurality of lighting devices (11);
- a plurality of smart actuators (12) adapted to respectively control said lighting devices (11) wherein each of said smart actuators (12) is associated with a unique identification code;
- at least one control device (20) according to one or more of the preceding claims.

8. Lighting system (10) wherein said smart actuators (12) are connected to a communication BUS (13) and said at least one control device (20) is adapted to be connected to said communication BUS (13).

9. Method for configuring a lighting system according to claim 7 or 8 comprising, for each of said push-button electric control apparatuses (22) of said at least one control device (20), the steps:
a) entering a configuration mode when said at least one push-button electric control apparatus (21) is pressed for a predetermined time interval and for carrying out, in said configuration mode, the steps:
b) querying said smart actuators (12) and receiving the respective identification code therefrom by means of said data transceiver module (23), and storing said identification codes received in a predetermined order;
c) for each identification code received, controlling the turning on of the respective lighting device (11), storing the light intensity detected by said light intensity sensor (22) and controlling the turning off of said respective lighting device (11);
d) selecting the lighting device (11) in relation to which the highest light intensity was detected, uniquely associating said at least one push-button electric control apparatus (21) with the control of the smart actuator (12) of said selected lighting device (11) and storing such association.

10. Method according to claim 9, wherein before associating said selected lighting device (11) with said at least one push-button electric control apparatus (21), a verification step is carried out comprising the following operations:
- controlling the turning on of said selected lighting device (11), storing the light intensity detected by said light intensity sensor (22) and controlling the turning off of said selected lighting device (11);
- verifying that the light intensity detected in relation to said selected lighting device (11) is the highest of those detected and stored in relation to said lighting devices (11).

11. Method according to claim 9 or 10, comprising the step:
- notifying a user of the successful association between push-button electric control apparatus (21) and selected lighting device (11).
